# EUROPÄISCHE PATENTSCHRIFT

(11) **EP 2 209 978 B1**
(45) Veröffentlichungstag und Bekanntmachung des Hinweises auf die Patenterteilung: **17.04.2013**
(21) Anmeldenummer: 08852712.2
(22) Anmeldetag: 19.11.2008
(51) Int. Cl.: F02D 41/00, F02D 41/22, F02B 39/16, F02B 37/18

(54) **VERFAHREN ZUR FESTSTELLUNG DER GÄNGIGKEIT EINES VERSTELLMECHANISMUS EINES ABGASTURBOLADERS**
METHOD FOR DETERMINING THE STATE OF OPERATION OF AN ADJUSTING MECHANISM OF AN EXHAUST GAS TURBOCHARGER
PROCÉDÉ POUR DÉTERMINER LA MOBILITÉ D'UN MÉCANISME DE RÉGLAGE D'UN TURBOCOMPRESSEUR

(30) Priorität: 23.11.2007 DE 102007056557
(43) Veröffentlichungstag der Anmeldung: 28.07.2010
(73) Patentinhaber: Bosch Mahle Turbo Systems GmbH & Co. KG, 70376 Stuttgart (DE)
(72) Erfinder: BEDOE, Stefan, 70197 Stuttgart (DE); KRETH, Jens, 71739 Oberriexingen (DE); LAUBENDER, Jochen, 71706 Markgröningen (DE); NAUNHEIM, Dirk, 70176 Stuttgart (DE); WENGERT, Andreas, 71549 Auenwald (DE)
(74) Vertreter: BRP Renaud & Partner
(86) Internationale Anmeldenummer: PCT/EP2008/065784
(87) Internationale Veröffentlichungsnummer: WO 2009/065839

(56) Entgegenhaltungen:
- DE-A1- 19 602 265
- JP-A- 2003 293 784
- JP-A- 2006 070 781
- JP-A- 2007 113 427

## Beschreibung

Die Erfindung betrifft ein Verfahren zur Feststellung der Gängigkeit, insbesondere Schwergängigkeit und/oder Leichtgängigkeit, eines elektromechanischen Verstellmechanismus zur Beeinflussung einer Abgasströmung eines Abgasturboladers eines Fahrzeugs, insbesondere Kraftfahrzeugs.

### Stand der Technik

Brennkraftmaschinen von Kraftfahrzeugen werden zur Leistungssteigerung häufig aufgeladen betrieben, wozu Abgasturbolader Verwendung finden. In Abhängigkeit des jeweiligen Betriebszustandes der Brennkraftmaschine muss ein zum Antrieb des Abgasturboladers auf die Turbine geleiteter Abgasmassenstrom an der Turbine vorbei oder über die Turbine durch mechanische Verschlechterung der Anströmung der Turbine abgebaut werden, um die Wirkung des Turboladers an den Betriebszustand der Brennkraftmaschine anzupassen und den Turbolader selbst vor insbesondere mechanischer Überlastung zu schützen. Der Abbau des Abgasmassenstroms durch Vorbeiführung an der Turbine erfolgt in bekannter Weise über ein so genanntes Wastegate, bei Ableitung über die Turbine selbst durch mechanische Verschlechterung der Anströmung der Turbine werden die Prinzipien der variablen Turbinengeometrie, insbesondere über eine Verstellung einer Leitbeschaufelung herangezogen. In beiden Fällen werden bewegte mechanische Komponenten verwendet, um einerseits das Wastegate zu betätigen, oder andererseits Elemente der variablen Turbinengeometrie, beispielsweise die Leitbeschaufelung, zu verstellen. Diese mechanisch bewegten Elemente werden teilweise elektrisch betätigt, sodass sich ein elektromechanischer Verstellmechanismus ausbildet. Diese weisen im Regelfall einen elektrischen Steller, beispielsweise einen Elektromotor auf, ein Übersetzungsgetriebe, eine Lagerückmeldung und beispielsweise eine Schubstange, die letztlich die Verstellelemente angreift und kraftbeaufschlagt. Eine einwandfreie Funktion dieses elektromechanischen Verstellmechanismus über die Fahrzeuglebensdauer ist erforderlich, um den Abgasturbolader vor Beschädigungen beispielsweise durch Überdrehzahl zu schützen. Durch die in Abgasturboladern, insbesondere in Turbinen von Abgasturboladern regelmäßig vorherrschenden, sehr hohen Temperaturen, kann es durch Versottung, Verzunderung, Thermospannungen oder allgemein mechanischen Verschleiß in ungünstigen Fällen zu Funktionsbeeinträchtigungen des rein mechanischen Teiles des Verstellmechanismus kommen, beispielsweise zu einem Verklemmen oder einem Schwergängigwerden. Dies führt dazu, dass der mechanische Teil des Verstellmechanismus nicht mehr ausreichend schnell oder nicht in zutreffender Weise den Abgasmassenstrom reguliert, mit der Folge, dass die Turbine den gewünschten Betriebspunkt nicht erreicht oder nicht hält, insbesondere eine vorgegebene Drehzahl über- oder unterschreitet. In ungünstigen Betriebszuständen kann dies durch Überdrehzahl zu einer Beschädigung des Abgasturboladers beispielsweise durch Überdrehzahl führen oder zu einer Über- oder Unterschreitung des Ladedrucks und damit zu einer Beeinträchtigung von Bauteilen im Luftpfad der Verbrennungsmaschine selbst.

Aus der JP 2007-113427 A ist ein Verfahren zum Überwachen einer Verstellbewegung von Leitschaufeln einer variablen Turbinengeometrie bei einem Abgasturbolader bekannt.

Aufgabe der Erfindung ist es, ein Verfahren zur Feststellung der Gängigkeit eines solchen Verstellmechanismus bereitzustellen, das den oben beschriebenen Anforderungen Rechnung trägt und eine frühzeitige Erkennung von unerwünschten Zuständen ermöglicht.

### Offenbarung der Erfindung

Hierzu wird ein Verfahren zur Feststellung der Gängigkeit, insbesondere Schwergängigkeit und/oder Leichtgängigkeit, eines elektromechanischen Verstellmechanismus zur Beeinflussung einer Abgasströmung eines Abgasturboladers eines Fahrzeugs, insbesondere Kraftfahrzeugs vorgeschlagen, das folgende Schritte aufweist:
- Messen der elektrischen Leistungsaufnahme als Ist-Wert eines elektrischen Stellmotors des Verstellmechanismus,
- Vergleichen der gemessenen Leistungsaufnahme mit einem eine Referenzgängigkeit des Verstellmechanismus repräsentierenden Referenzwerts und
- Ausgeben eines Signals, wenn der Ist-Wert vom Referenzwert stärker als eine vorgegebene Toleranz abweicht.

Ein direktes Maß für die Gängigkeit eines elektromechanischen Verstellmechanismus ist die zur Bewirkung der Verstellung erforderliche Kraft, die im Falle von elektromechanischen Verstellmechanismen als elektrische Leistungsaufnahme betrachtet werden kann. Mechanisch schwergängige, beispielsweise klemmende Komponenten bewegen sich nur mit höherem Kraftaufwand als leichtgängige, während solche mechanische Komponenten, die übergroße Toleranzen aufweisen, mit einem sehr geringen Kraftaufwand zu bewegen sind. Es wird insoweit zur Bestimmung dieser erforderlichen Kraft die elektrische Leistungsaufnahme des elektrischen Stellmotors des Verstellmechanismus gemessen, wobei der gemessene Wert als Ist-Wert den derzeitigen Zustand des Verstellmechanismus repräsentiert. Dieser Ist-Wert wird mit einem Referenzwert verglichen, der eine Referenzgängigkeit des Verstellmechanismus repräsentiert, also einen solchen Zustand, der als im Bereich der erwünschten Funktionsfähigkeit liegend angesehen wird. Der Vergleich liefert ein Ergebnis beispielsweise in Form einer Differenz, wonach sich die beiden Werte gar nicht oder aber in einem sich aus dem Vergleich ergebenden Maß unterscheiden. Es sind hierbei auch andere Auswerteverfahren denkbar, beispielsweise eine Quotientenbildung, eine Addition oder andere, aus dem Stand der Technik bekannt, geeignete Methoden. Hierbei ist es sinnvoll, eine Toleranz vorzusehen, in der der gemessene Ist-Wert von dem Referenzwert abweichen darf, ohne dass dies als unerwünschter Betriebszustand oder als Fehlfunktion des Verstellmechanismus gewertet wird. Weicht der Ist-Wert vom Referenzwert in einem solchen Maß ab, dass die vorgegebene Toleranz überschritten wird, wird ein Signal ausgegeben, das auf die Abweichung der Gängigkeit des Verstellmechanismus von der erwünschten Gängigkeit hinweist und/oder entsprechende Handlungen oder Verfahrensweisen veranlasst.

In einer Ausbildung des Verfahrens erfolgt das Messen der elektrischen Leistungsaufnahme durch eine Strommessung. Bei gegebener und gleichbleibender elektrischer Spannung, wie dies insbesondere beim Betrieb von Anlagen üblich ist und insbesondere in Kraftfahrzeugen durch das Fahrzeugbordnetz vorgegeben, ist die Stromaufnahme einer elektrischen Einrichtung proportional zu ihrer Leistung. Wird also ein Stellmotor in seiner Bewegung behindert, sodass er zur Bewirkung der Verstellung eine höhere Leistung aufwenden muss, wird seine Stromaufnahme ansteigen. Ein solcher Anstieg der Stromaufnahme lässt folglich auf eine erhöhte Leistungsaufnahme schließen. Diese Strommessung kann relativ einfach und preisgünstig verwirklicht werden und ist hierbei ein sicheres Maß für die aufgenommene Leistung des elektromechanischen Verstellmechanismus. Die Spannung eines Fahrzeugbordnetzes ist jedoch nicht konstant, sondern kann, abhängig vom Ladezustand der Batterie und von Umgebungsbedingungen, beispielsweise einer Außentemperatur, in gewissen Bereichen schwanken. Sinkt beispielsweise die Spannung des Fahrzeugbordnetzes bei längerer Kälteeinwirkung auf die Batterie ab, wird zur Aufbringung derselben Leistung eine höhere Stromaufnahme erfolgen. Dies ist bei der in Bezugsetzung eines Anstiegs der Stromaufnahme zur Leistungsaufnahme zu berücksichtigen. Dies kann beispielsweise dadurch geschehen, dass der Referenzwert in Art einer Tabelle auf eine bestimmte Spannung des Fahrzeugbordnetzes bezogen wird, und der Referenzwert in Abhängigkeit von der bei Durchführung des Verfahrens gemessenen Spannung des Fahrzeugbordnetzes gewählt wird.

In einer Verfahrensausbildung wird als Referenzwert ein gemessener oder ein vorgegebener Neuzustandswert verwendet. Der Referenzwert gibt also die Leistungsaufnahme des elektrischen Stellmotors im Neuzustand wieder, wobei dieser entweder gemessen werden kann, was eine sehr genaue Bestimmung des Neuzustandswertes ermöglicht, oder er kann vorgegeben werden, beispielsweise als ein Durchschnitt von Werten einer Serie von Stellmotoren, wobei hier sinnvollerweise bei Vorgabe der Toleranz eine Serienstreuung der Neuzustandswerte der Stellmotoren über die gesamte Serie berücksichtigt wird. Der Differenzwert wird hierbei sinnvollerweise gespeichert oder durch elektrische Schaltungsvorgaben festgelegt. Bevorzugt erfolgt eine Speicherung in einem elektronischen System, wie diese insbesondere in Kraftfahrzeugen verbreitet sind. Ganz bevorzugt erfolgt der Vergleich wie auch die Speicherung von Referenzwerten in einem elektronischen Steuergerät des Kraftfahrzeugs. Der Referenzwert kann hierbei beispielsweise auch über Kennfelder, Kennlinien, spezielle Wertetabellen oder Speichereinheiten eines Netzes, beispielsweise eines neuronalen Netzes, oder in anderen aus dem Stand der Technik bereits bekannten Speichereinheiten abgelegt sein.

In einer weiteren Verfahrensausbildung beinhaltet die Toleranz eine Unterschreitung und/oder Überschreitung bezüglich des Referenzwertes. Die Toleranz sorgt demzufolge dafür, dass beim Vergleich des Ist-Wertes mit dem Referenzwert nicht jede auch noch so kleine Abweichung als Fehler erkannt wird. Es ist bekannt, dass elektromechanische Systeme innerhalb bestimmter Betriebsbereiche funktionieren, wobei die einzelnen Betriebspunkte sich innerhalb des Betriebsbereichs durchaus deutlich unterscheiden können, ohne dass dies eine Fehlfunktion wäre oder zu einer Fehlfunktion führen würde. Um diesem Umstand Rechnung zu tragen, umfasst die Toleranz eine Unterschreitung und/oder eine Überschreitung bezüglich des Referenzwerts. Bei einer Überschreitung des Referenzwerts innerhalb der Toleranz liegt zwar eine erhöhte Leistungsaufnahme vor, die beispielsweise auf beginnende Schwergängigkeit schließen lässt. Diese ist aber noch nicht so gravierend, dass sie außerhalb des erwünschten Betriebsfeldes liegt. Gleichermaßen deutet eine Unterschreitung des Referenzwertes auf eine verminderte Leistungsaufnahme und damit auf eine Leichtgängigkeit hin, was auf Verschleiß mechanischer Komponenten schließen lassen kann. Gleichwohl ist nicht jede Leichtgängigkeit mit einem die Funktion beeinträchtigenden Verschleißzustand gleichzusetzen. Regelmäßig wird es sogar so sein, dass verschleißbedingte Leichtgängigkeit eher zu tolerieren ist als beginnende Schwergängigkeit des Verstellmechanismus, der zu einem trägen Ansprechen oder gar zum Funktionsausfall führen kann.

In einer bevorzugten Verfahrensausbildung wird die Toleranz als vorgegebene Toleranz oder als sich zeitabhängig ändernde Toleranz verwendet. Eine vorgegebene Toleranz ist hierbei eine solche, bei der der Wert der Toleranz fest vorgegeben, beispielsweise gespeichert ist, und wobei sich dieser Wert der Toleranz über die Lebensdauer des Verstellmechanismus nicht ändert. Eine sich zeitabhängig ändernde Toleranz ist hierbei eine solche, die der fortschreitenden Lebensdauer des Verstellmechanismus Rechnung trägt. Beispielsweise kann im Neuzustand ein Toleranzwert geringer angesetzt werden, um darauf hinzuweisen, dass der Verstellmechanismus zwar noch funktioniert, aber seine Werte deutlich außerhalb der Serienstreuung liegen und somit in ungünstigen Fällen mit baldigem Ausfall zu rechnen ist. Andererseits kann durch sich zeitabhängig ändernde Toleranzwerte auch eine sich vergrößernde Toleranz insbesondere im Freigängigkeitsbereich (Referenzwertunterschreitung) Rechnung getragen werden, die die Funktion nicht beeinträchtigt.

In einer anderen bevorzugten Verfahrensausbildung wird die Toleranzabhängigkeit von einer bei der Verfahrensausführung gemessenen Ruhespannung des Fahrzeugs bestimmt. Hierbei lässt sich dem Umstand Rechnung tragen, dass die Stromaufnahme nicht nur von der zur Bewegung des Verstellmechanismus aufzuwendenden Leistung abhängt, sondern auch von der vorgefundenen Spannung des Fahrzeugbordnetzes. Diese wird als Ruhespannung ermittelt, also unbelastet, um mechanische Einflüsse des Verstellmechanismus in dieser Phase auszuschließen. Ist die Ruhespannung bekannt, kann für den Referenzwert der Leistungsaufnahme bestimmt werden, wie die entsprechende Stromaufnahme sein darf. Erst Abweichungen von diesem Wert (der der Ruhespannung Rechnung trägt), führen zu einer Berücksichtigung als mögliche Fehlerwerte, insbesondere dann, wenn die Toleranz überschritten ist.

In einer weiteren bevorzugten Ausgestaltung des Verfahrens ist die Toleranz ein Toleranzband. Es wird folglich nicht ein einzelner Wert als Toleranz vorgegeben, bei dessen Überschreitung von einem unerwünschten Zustand des Verstellmechanismus ausgegangen wird, sondern ein Toleranzband, innerhalb dessen gemessene Werte liegen können, um beispielsweise Schwankungen der Ruhespannung im Fahrzeugbordnetz begegnen zu können.

In einer bevorzugten Verfahrensausbildung wird als Signal eine Warnmeldung, insbesondere eine akustische und/oder visuelle Warnmeldung, ausgegeben. Dem Fahrzeugführer wird demzufolge unmittelbar mitgeteilt, dass die Gängigkeit des elektromechanischen Verstellmechanismus nicht dem erwünschten Zustand entspricht und dass möglicherweise mit Leistungs- oder Funktionsbeeinträchtigungen zu rechnen ist. Der Fahrzeugführer kann sein Verhalten im Hinblick auf den Betrieb des Fahrzeugs demzufolge auf diesen Umstand einrichten, er kann insbesondere eine Überprüfung des Verstellmechanismus und/oder eine Fehlerbehebung veranlassen.

In einer weiteren bevorzugten Verfahrensausbildung erfolgt durch das Signal ein selbsttätiger Eintrag in einen elektronischen Fehlerspeicher. Elektronische Fehlerspeicher für Fahrzeuge, insbesondere Kraftfahrzeuge, sind bekannt. Beispielsweise in einer Ausbildung als On-Board-Diagnosesysteme bieten sie die Möglichkeit, Fehlerzustände des Fahrzeugs über Diagnosecomputer auslesbar und interpretierbar zu machen. Hierdurch wird, beispielsweise beim Service des Fahrzeugs und/oder bei Regelinspektionen, die Abweichung der Gängigkeit des Verstellmechanismus von dem erwünschten Zustand ausgewiesen und kann durch kompetentes Personal behoben werden.

In einer weiteren, besonders bevorzugten Verfahrensausbildung wird durch das Signal ein Notlaufzustand eines Steuergeräts des Fahrzeugs herbeigeführt. Die Herbeiführung des Notlaufzustands erlaubt es hierbei, die Brennkraftmaschine in einem solchen (verminderten) Leistungsbereich zu betreiben, in dem die unmittelbar und unverzüglich wirkende Verstellung des Verstellmechanismus nicht mehr erforderlich ist. Wird beispielsweise keine Leistung mehr zugelassen, die ein entsprechendes Hochlaufen des Abgasturboladers auf hohe Drehzahlen erfordert, ist auch ein schnelles Drehzahlreduzieren zur Vermeidung von Überdrehzahl nicht erforderlich. Der beispielsweise schwergängige Verstellmechanismus wird daher nicht in einer dem Normalbetrieb entsprechenden Weise gefordert, wodurch Schäden an dem Abgasturbolader wie auch an der Brennkraftmaschine selbst vermieden werden können. Selbstverständlich wird ein solcher Notlaufzustand in der aus dem Stand der Technik bekannten Art und Weise dem Führer des Fahrzeugs signalisiert, wodurch dieser zum Besuch einer kompetenten Werkstatt angehalten wird. Weitere vorteilhafte Ausführungsformen ergeben sich aus den Unteransprüchen und aus Kombinationen derselben.

Die Erfindung wird nachfolgend an einem beispielhaften Verfahrensablauf näher erläutert, ohne jedoch hierauf beschränkt zu sein.

### Kurze Beschreibung der Zeichnungen

Es zeigt die
- Figur: einen beispielhaften Verfahrensablauf zur Feststellung der Gängigkeit des elektromechanischen Verstellmechanismus.

### Ausführungsform(en) der Erfindung

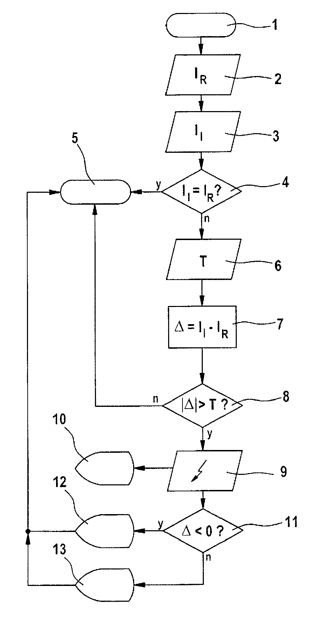

Die Figur zeigt exemplarisch einen beispielhaften Verfahrensablauf zur Feststellung der Gängigkeit des elektronischen Verstellmechanismus. Zum Verfahrensstart 1 wird das Verfahren gestartet, beispielsweise durch die Betätigung einer Motorstarteinrichtung, oder um eine kontinuierliche Überprüfung mittels des Verfahrens durchführen zu können, bei jeder einzelnen, beispielsweise vom Steuergerät kommenden Anforderung zur Verstellung des elektromechanischen Verstellmechanismus des Abgasturboladers. In einem Ausleseschritt 2 wird ein Referenzwert I_{R} aus einem Speicherbereich ausgelesen und zur Überprüfung im Verfahren bereitgestellt. In dem nachfolgenden Erfassungsschritt 3 wird die elektrische Leistungsaufnahme der elektromechanischen Verstelleinrichtung (insbesondere eines Elektromotors) gemessen und als Ist-Wert I_{I} zur Weiterverarbeitung innerhalb des Verfahrens bereitgestellt. In einem Auswerteschritt 4 wird überprüft, ob der Ist-Wert I_{I} gleich dem Referenzwert I_{R} ist. Ist dies der Fall, liegen Abweichungen der Gängigkeit des elektromechanischen Verstellmechanismus nicht vor; die Leistungsaufnahme entspricht nämlich dem Referenzwert der Leistungsaufnahme, sodass nicht von unerwünschtem Verhalten auszugehen ist. Das Verfahren wird in diesem Fall mit einem Terminationsschritt 5 beendet. Ergibt der Auswerteschritt 4, dass der Ist-Wert I_{I} ungleich dem Referenzwert I_{R} ist, wird eine vorgegebene Toleranz T beispielsweise aus einem Speichermodul ausgelesen und zur Weiterverarbeitung innerhalb des Verfahrens bereitgestellt, nämlich in einem Toleranzausleseschritt 6. In einem nachfolgenden Differenzierschritt 7 wird die Differenz Δ zwischen dem Istwert I_{I} und dem Referenzwert I_{R} ermittelt. Die Differenz Δ ist positiv, wenn der Ist-Wert I_{I} den Differenzwert übersteigt, die Leistungsaufnahme also höher als vorgegeben ist, und negativ, wenn die Leistungsaufnahme geringer ist (der Verstellmechanismus beispielsweise aufgrund von Verschleiß leichtgängiger geworden ist). In einem nachfolgenden Relevanzprüfungsschritt 8 wird bei Nichtübereinstimmung des IstWerts I_{I} mit dem Referenzwert I_{R} die ermittelte Differenz Δ darauf geprüft, ob der Betrag der Differenz Δ größer als die vorgegebene Toleranz T ist. Ist dies nicht der Fall, wird das Verfahren zur Beendigung zum Terminationsschritt 5 verzweigt. Es liegt hierbei nämlich eine innerhalb der Toleranz liegende Veränderung der Gängigkeit des Verstellmechanismus vor, die als unbeachtlich nicht weiter berücksichtigt wird. Ist der Betrag der Differenz Δ jedoch größer als die vorgegebene Toleranz T, so wird in einem Signalisierungsschritt 9 ein Signal ausgegeben, das auf eine unerwünschte Veränderung der Gängigkeit des elektromechanischen Verstellmechanismus hinweist. Das Signal kann beispielsweise in einer visuellen oder akustischen Darstellung 10 bestehen, oder in der Ausgabe eines Fehlereintrages und dessen Einspeichern in einen Fehlerspeicher insbesondere des Steuergerätes des Fahrzeugs. In einer Verfahrensfortbildung wird anschließend in einem Fehlerartprüfungsschritt 11 überprüft, ob die Differenz Δ kleiner 0 ist, also einen negativen Wert hat; in diesem Fall ist von einer unerwünschten Leichtgängigkeit des elektromechanischen Verstellmechanismus auszugehen. Ist die Differenz Δ kleiner 0, wird eine Verschleißwarnung 12 ausgegeben, wobei auch hier wieder ein Eintrag in einen Fehlerspeicher insbesondere des Steuergerätes erfolgen kann. Anschließend wird zur Verfahrensbeendigung an den Terminationsschritt 5 verzweigt. Ist die Differenz Δ hingegen größer 0, die Prüfung im Fehlerartprüfungsschritt folglich negativ ausgefallen, wird eine Schwergängigkeitsmeldung 13 ausgegeben und auch hier wahlweise wieder ein Eintrag in den Fehlerspeicher des Steuergeräts des Kraftfahrzeugs über die Fehlerart eingetragen. Sodann wird an den Terminationsschritt 5 zur Verfahrensbeendigung verzweigt.

Gerade durch die Bestimmung der Art des vorliegenden Fehlers kann ohne Weiteres auf die vorzunehmenden Maßnahmen zur Fehlerbehebung geschlossen werden; der Eintrag in den Fehlerspeicher des Steuergeräts erlaubt hierbei das Auslesen des Fehlers durch qualifiziertes Personal.

## Patentansprüche

1. Verfahren zur Feststellung der Gängigkeit eines elektromechanischen Verstellmechanismus zur Beeinflussung einer Abgasströmung eines Abgasturboladers eines Fahrzeugs mit folgenden Schritten:
- Messen der elektrischen Leistungsaufnahme als Ist-Wert I_{I} eines elektromechanischen Stellmotors des Verstellmechanismus,
- Vergleichen der gemessenen Leistungsaufnahme mit einem eine Referenzgängigkeit des Verstellmechanismus repräsentierenden Referenzwerts I_{R} und
- Ausgeben eines Signals und Ausgeben einer Verschleißwarnung, wenn der Ist-Wert I_{I} vom Referenzwert I_{R} stärker als eine vorgegebene Toleranz abweicht und der Ist-Wert I_{I} geringer ist als der Referenzwert I_{R} sowie
- Ausgeben eines Signals und Ausgeben einer Schwergängigkeitsmeldung, wenn der Ist-Wert I_{I} vom Referenzwert I_{R} stärker als die vorgegebene Toleranz abweicht und der Ist-Wert I_{I} den Referenzwert I_{R} übersteigt.

2. Verfahren nach Anspruch 1, **dadurch gekennzeichnet, dass** das Messen der elektrischen Leistungsaufnahme durch eine Strommessung erfolgt.

3. Verfahren nach einem der vorhergehenden Ansprüche, **dadurch gekennzeichnet, dass** als Referenzwert ein gemessener oder vorgegebener Neuzustandswert verwendet wird.

4. Verfahren nach einem der vorhergehenden Ansprüche, **dadurch gekennzeichnet, dass** die Toleranz eine Unterschreitung und/oder Überschreitung bezüglich des Referenzwertes beinhaltet.

5. Verfahren nach einem der vorhergehenden Ansprüche, **dadurch gekennzeichnet, dass** die Toleranz abhängig von einer bei der Verfahrensausführung gemessenen Ruhespannung des Fahrzeugs bestimmt wird.

6. Verfahren nach einem der vorhergehenden Ansprüche, **dadurch gekennzeichnet, dass** die Toleranz ein Toleranzband ist.

7. Verfahren nach einem der vorhergehenden Ansprüche, **dadurch gekennzeichnet, dass** als Signal eine Wammeldung, insbesondere akustische und/oder visuelle Warnmeldung, ausgegeben wird.

8. Verfahren nach einem der vorhergehenden Ansprüche, **dadurch gekennzeichnet, dass** durch das Signal ein selbsttätiger Eintrag in einen elektronischen Fehlerspeicher erfolgt.

9. Verfahren nach einem der vorhergehenden Ansprüche, **dadurch gekennzeichnet, dass** durch das Signal ein Notlaufzustand eines Steuergeräts des Fahrzeugs herbeigeführt wird.

## Claims

1. A method for determining the state of operation of an electromechanical adjusting mechanism for influencing an exhaust gas flow of an exhaust gas turbocharger of a vehicle having the following steps:
- measuring the electric power consumption as actual value Iₗ of an electromechanical actuating motor of the adjusting mechanism,
- comparing the measured power consumption with a reference value I_{R} representing a reference state of operation of the adjusting mechanism and
- outputting a signal and outputting a wear warning when the actual value Iₗ deviates from the reference value I_{R} by more than a predetermined tolerance and the actual value Iₗ is lower than the reference value I_{R} and
- outputting a signal and outputting a heavy state of operation message when the actual value Iₗ deviates from the reference value IR by more than the predetermined tolerance and the actual value Iₗ exceeds the reference value I_{R}.

2. The method according to Claim 1, **characterized in that** the measuring of the electrical power consumption is effected through a current measurement.

3. The method according to any one of the preceding claims, **characterized in that** as reference value a measured or predetermined new state value is used.

4. The method according to any one of the preceding claims, **characterized in that** the tolerance includes an undershooting and/or an exceeding with respect to the reference value.

5. The method according to any one of the preceding claims, **characterized in that** the tolerance is determined dependent on a voltage at rest of the vehicle measured when carrying out the method.

6. The method according to any one of the preceding claims, **characterized in that** the tolerance is a tolerance band.

7. The method according to any one of the preceding claims, **characterized in that** as signal a warning message, in particular an acoustic and/or visual warning message is output.

8. The method according to any one of the preceding claims, **characterized in that** through the signal an automatic entry in an electronic fault memory takes place.

9. The method according to any one of the preceding claims, **characterized in that** through the signal an emergency operating state of a control unit of the vehicle is brought about.

## Revendications

1. Procédé pour déterminer la mobilité d'un mécanisme de réglage électromagnétique pour influencer un courant de gaz d'échappement d'un turbocompresseur de gaz d'échappement d'un véhicule automobile, comportant les étapes suivantes :
- mesurer la puissance absorbée électrique comme valeur effective Iᵢ d'un servomoteur électromécanique du mécanisme de réglage,
- comparer la puissance absorbée mesurée avec une valeur de référence I_{R} représentant une mobilité de référence du mécanisme de réglage et
- émettre un signal et émettre une alerte d'usure, quand la valeur effective I_{I} s'écarte d'une valeur de référence I_{R} au-delà d'une tolérance prescrite et la valeur effective I_{I} est inférieure à la valeur de référence I_{R} ainsi que
- émettre un signal et émettre un message de mobilité difficile, quand la valeur effective I_{I} s'écarte de la valeur de référence I_{R} au-delà de la tolérance prescrite et la valeur effective I_{I} dépasse la valeur de référence I_{R}.

2. Procédé selon la revendication 1, **caractérisé en ce que** la mesure de la puissance absorbée électrique a lieu au moyen d'une mesure de courant.

3. Procédé selon une des revendications précédentes, **caractérisé en ce que** comme valeur de référence une valeur d'état neuf mesurée ou prescrite est employée.

4. Procédé selon une des revendications précédentes, **caractérisé en ce que** la tolérance contient un sous-dépassement et/ou un sur-dépassement par rapport à une valeur de référence.

5. Procédé selon une des revendications précédentes, **caractérisé en ce que** la tolérance est déterminée en fonction d'une tension au repos du véhicule mesurée lors de la mise en oeuvre du procédé.

6. Procédé selon une des revendications précédentes, **caractérisé en ce que** la tolérance est une bande de tolérance.

7. Procédé selon une des revendications précédentes, **caractérisé en ce que** comme signal un message d'alerte, notamment un message d'alerte acoustique et/ou visuelle, est émis.

8. Procédé selon une des revendications précédentes, **caractérisé en ce que** par l'intermédiaire du signal, une entrée automatique a lieu dans une mémoire d'erreurs électronique.

9. Procédé selon une des revendications précédentes, **caractérisé en ce que** par l'intermédiaire du signal, un état de fonctionnement exceptionnel d'urgence d'un appareil de commande du véhicule est généré.
